(19) Europäisches Patentamt
European Patent Office
Office européen des brevets

(11) Veröffentlichungsnummer: **0 260 447 B1**

# (12) EUROPÄISCHE PATENTSCHRIFT

(45) Veröffentlichungstag der Patentschrift: **28.10.92**

(51) Int. Cl.5: **C08F 283/10**, C08L 51/08, //C09D4/00,(C08L51/08,75:04)

(21) Anmeldenummer: **87111849.3**

(22) Anmeldetag: **15.08.87**

## (54) Wässriges Überzugsmittel, Verfahren zu seiner Herstellung und dessen Verwendung.

(30) Priorität: **19.08.86 DE 3628124**

(43) Veröffentlichungstag der Anmeldung:
**23.03.88 Patentblatt 88/12**

(45) Bekanntmachung des Hinweises auf die Patenterteilung:
**28.10.92 Patentblatt 92/44**

(84) Benannte Vertragsstaaten:
**AT BE CH DE ES FR GB IT LI NL SE**

(56) Entgegenhaltungen:
**EP-A- 0 226 171**
**FR-A- 2 077 067**

**PATENT ABSTRACTS OF JAPAN, Vol. 9, Nr. 45 (C-268)[1768], 26 Februar 1985**

(73) Patentinhaber: **Herberts Gesellschaft mit beschränkter Haftung**
**Christbusch 25**
**W-5600 Wuppertal 2(DE)**

(72) Erfinder: **Stranghöner, Dieter, Dr. Dipl. Chem.**
**Hobeuken 36**
**W-4322 Sprokhövel 2(DE)**
Erfinder: **Patzschke, Hans-Peter, Dr.**
**Am Heckendorn 71**
**W-5600 Wuppertal 2(DE)**
Erfinder: **Lühmann, Christa**
**Rottschneiderstrasse 56**
**W-5600 Wuppertal 11(DE)**

(74) Vertreter: **Türk, Gille, Hrabal, Leifert**
**Brucknerstrasse 20**
**W-4000 Düsseldorf 13(DE)**

EP 0 260 447 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein wäßriges Überzugsmittel, das ein filmbildendes Material auf der Basis eines Reaktionsprodukts von carboxyfunktionellen Polykondensaten und $\alpha,\beta$-olefinisch ungesättigten Monomeren, zusammen mit einer Polyurethandispersion und gegebenenfalls Anreibeharzen und/oder Anreibehilfsmitteln enthält.

Überzugsmittel, die reaktive Polymerisatdispersionen enthalten, werden in der DE-OS 31 28 025 und der DE-OS 31 28 062 beschrieben. Sie ergeben witterungsbeständige Beschichtungen, zeigen jedoch beim Einsatz in Mehrschichtlackierungen nur unzureichende Haftungseigenschaften

Carboxyfunktionelle selbsthärtende Polymerisate, die zusätzlich Epoxygruppen enthalten, beispielsweise hergestellt entsprechend DE-OS 28 11 913 ergeben in Kombination mit Melaminharzen in "metallic-basecoat"-Rezepturen (nach DE-OS 33 01 729) gut haftende Beschichtungen, die allerdings ungünstige Eigenschaften beispielsweise bezüglich der Lagerung in Wasser aufweisen. Insbesondere gilt dies für den Aufbau von Lacken unter sogenannten Reparaturbedingungen, wobei bei niedrigen Härtungstemperaturen weitere Lackschichten auf bereits lackierte Untergründe aufgebracht werden. Die genannten Polymerisate weisen jedoch selbst bei Zusatz von Verdickern keine befriedigenden rheologischen Eigenschaften auf.

Abmischungen von Polymerisatdispersionen, z.B. etwa der in den bereits genannten DE-OS 31 28 025 und 31 28 062 beschriebenen Art mit den oben angeführten selbsthärtenden Polymeren ergeben bei Kombination mit reaktiven Melaminharzen in wäßrigen "metallic-basecoat-"Beschichtungen keine Verbesserung der an sich gewünschten Eigenschaftskombination von Zwischenschichthaftung und Wasserstabilität. Im Gegenteil, es tritt in der Regel eine Kombination aus schlechter Zwischenschichthaftung und ungenügender Wasserlagerstabilität auf. Diese Mischung ist außerdem mit üblichen Verdickern auf Basis Polyacrylaten, Polyethylenoxid, Polyvinylalkoholen, Celluloseethern und anderen nicht ausreichend verdickbar.

Aufgabe der vorliegenden Erfindung war die Bereitstellung eines wäßrigen Überzugsmittels, das ausgezeichnete Haftungseigenschaften auf verschiedenen Substraten ergibt, einen guten Verlauf aufweist , zu Überzügen mit einer glatten Oberfläche führt und günstige Applikationseigenschaften hat. Insbesondere soll ein derartiges Überzugsmittel für metallic-basecoats geeignet sein und zu einer guten Ausrichtung metallischer oder night-metallischer Effektpigmente führen.

Diese Aufgabe wird durch die erfindungsgemäßen wäßrigen Überzugsmittel gelöst, die ein filmbildendes Material auf der Basis einer wäßrigen Dispersion von wasserverdünnbaren Bindemitteln neben Pigmenten (farbgebende Pigmente und/oder metallische und/oder nicht-metallische Effektpigmente) enthalten. Die Bindemittel bestehen aus einem Gemisch aus

A) 50 bis 95 Gew.-% eines Reaktionsproduktes aus

  a) 5 bis 95 Gew.-% eines carboxyfunktionellen Polykondensats, das zusätzlich Epoxygruppen enthält,

  b) 95 bis 5 Gew.-% mindestens eines copolymerizier-baren $\alpha,\beta$-olefinisch ungesättigten Monomeren, und

  c) 0 bis 20 Gew.-% üblicher Hilfsstoffe für die Polymerherstellung, wobei sich die Mengenangaben der Bestandteile a) bis c) auf den Festkörperanteil der Komponente A beziehen und ihre Summe stets 100 Gew.-% beträgt,

B) 50 bis 5 Gew.-% Polyurethandispersion, und

C) 0 bis 20 Gew.-% Anreibeharz und/oder Anreibemittel

wobei sich die Mengenanteile von A) und B) und C) auf den Festkörperanteil beziehen und ihre Summe stets 100% beträgt.

Bevorzugt handelt es sich bei der Komponente B um eine harnstoffgruppenhaltige Polyurethandispersion.

Die in den erfindungsgemäßen wäßrigen Überzugsmitteln eingesetzte Komponente A kann hergestellt werden durch radikalische Emulsionspolymerisation von

a) 5 bis 95 Gew.-% eines carboxyfunktionellen Polymerisats in Form eines wäßrigen Systems mit

b) 95 bis 5 Gew.-% mindestens eines copolymerisierbaren $\alpha,\beta$-olefinisch ungesättigten Monomeren in Gegenwart von

c) 0 bis 20 Gew.-% anionischen oder nicht-ionischen Emulgatoren oder eines Gemisches von beiden, oder von Schutzkolloiden,

bezogen auf den Festkörperanteil der Komponenten a) bis c), unter Zusatz von 0,01 bis 10 Gew.-% mindestens eines Polymerisationsinitiators, bezogen auf den Monomeranteil b) in Gegenwart von weiteren üblichen Zusätzen bei einer Temperatur zwischen 0 bis 150 °C.

Durch Wahl geeigneter Ausgangssubstanzen ist ein Einstellen von Polymerisateigenschaften innerhalb weiter Grenzen möglich. Beispielsweise können durch Polymerisation nicht vernetzend wirkender Vinylmonomerer in der wäßrigen Dispersion oder Lösung eines unvernetzten selbsthärtenden carboxyfunktionellen

Polymeren wasserlösliche bzw. in Wasser dispergiefähige Polymerisate hergestellt werden. Dabei können beispielsweise die hydrophilen oder auch die hydrophoben Eigenschaften und die Härte bzw. die Flexibilität durch geeignete Wahl der Komponenten a) und b) gezielt eingestellt werden. Weiterhin können durch den Einbau reaktiver Vinylmonomerer zunächst in Wasser dispergiefähige Polymerisate hergestellt werden, die dann devorzugt nach dem Aufbringen auf ein Substrat über eine entsprechende Nachbehandlung in den vernetzten Zustand überführt werden.

Geeignete Polykondensate der Komponente a) werden in bekannter Weise gemäß DE-OS 28 11 913 durch Umsetzung von $\alpha$) halogenfreien Polycarbonsäureeinheiten, $\beta$) salzbildenden Substanzen der Gruppe Alkali, Erdalkali und quartäre Ammoniumsalze, organishe Basen und/oder Ammoniak, $\gamma$), OH-Gruppen enthaltenden Polymeren mit einer OH-Zahl von 20 bis 150 und/oder $\gamma'$) Epoxidverbindungen und anschließender Lösung und/oder Dispergierung in Wasser hergestellt. In den Polymeren sind mindestens 3 der 4 augeführten Einheiten enthalten. Das Molekulargewicht derartiger Verbindungen liegt im Gewichtsmittel $\overline{M}_w$ bei 2000 bit 100 000, vorzugsweise 6000 bis 50 000 (Gelchromatographie, Polystyrol-Standard) .

Als Komponente b) kommen $\alpha,\beta$-olefinisch ungestättigte Monomere, und zwar praktisch alle radikalisch polymerisierbaren Monomeren in Frage, wobei jedoch für Copolymerisationen die üblichen Einschränkungen gelten, die durch das Q- und e-Schema nach Alfrey und Price bzw. durch die Copolymerisationsparameter vorgegeben sind (vgl. z.B. Brandrup, Immergut, Polymer Handbook, 2nd ed. (1975) John Wiley & Sohn, New York).

Geeignete $\alpha,\beta$-olefinisch ungesättigte Monomere sind beispeilsweise (Meth)acrylatmonomere wie Methyl(meth)acrylat, Ethyl(meth)acrylat, Propyl(meth)acrylat, die verschiedenen isomere Butyl(meth)-acrylate, isomere Octyl (meth)acrylate, z.B. 2-Ethylhexyl(meth)arcylat, (Meth)acrylamix, N-Methylol(meth)-acrylamix, (Meth)acrylnitril und auch (Meth)acrylsäure selbst, vinylaromatische Monomere wie Styrol, $\alpha$-Methylstyrol, Vinyltoluol, Vinylpyridin, Vinylestermonomere wie Vinylacetat, Vinylester verzweigter ($C_9$-$C_{12}$)-Carbonsäuren wie Versaticsäurevinylester; Linolsäurevinylester, Ester, Halbester, Amide, Halbamide von$\alpha,\beta$-ethylenisch ungesättigten Mono- und Dicarbonsäuren wie Crotonsäure, Maleinsäure, Fumarsäure, Sorbinsäure, Monomere ungesättigter Halogenverbindungen wie Vinylchlorid, Vinylidenchlorid, (Meth)acrylester teilweise und/oder vollständig fluorierter Alkohole entsprechend der allgemeinen Formel

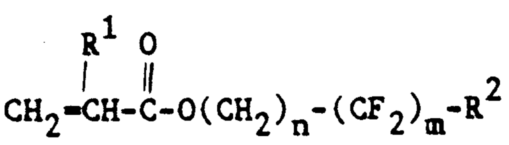

mit $R^1$ = H, $CH_3$; $R^2$ = H, F, n = 0-10 und m = 0-25, Hexafluorpropylen, Perfluorhexylethylen, 2-Hydroperfluorethylallylether und 2-Hydroperfluorpropylallylether, Monomere vom Typ mehrfach, vorzugsweise zwei bis dreifach ethylenisch ungesättigter Verbindungen wie Divinylbenzol, Ethandioldi(meth)acrylat, Propandioldi-(meth)acrylat, Butandioldi(meth)acrylat, Hexandioldi(meth)acrylat, Glycerintri(meth)acrylat, Pentaerythrittri-(meth)acrylat und Diallylphthalat. Werden mehrfach ethylenisch ungesättigte Monomere eingesetzt, so beträgt ihre Menge im allgemeinen 0,01 bis 20 Gew.-% bezogen auf die Gesamtmenge der Monomeren b).

Es ist auch möglich, Monomere mit funktionellen Gruppen einzusetzen, z.B. mit solchen chemischen Gruppierungen, die im aufgebrachten Lack zu Vernetzungen führten können, wie Carbonsäure-, Sulfosäure-, Hydroxy-, Amino-, Amido-, Keto-, Aldehyd-, Lactam-, Lacton-, Isocyanat-und Epoxygruppen. Cokondensationsfähige bzw. copolymerisationsfähige Monomere, die derartige funktionelle Gruppierungen tragen sind bekannt.

Der Einsatz hydrophiler Monomerer ist für die Durchführung der erfindungsgemäßen Polymerisationen möglich, aber night generell notwendig.

Eingesetzte Monomere, die Carbonsäuregruppierungen tragen, sind $\alpha,\beta$-ethylenisch ungesättigte Mono- und Dicarbonsäuren, wie z.B. Crotonsäure, Sorbinsäure, Itaconsäure, Fumarsäure, Maleinsäure, Maleinsäurehalbester, bzw. die Halbester der Itacon-, und der Fumarsäure, bevorzugt aber Acryl- und Methacrylsäure.

Ungesättigte Monomere, die zur Vernetzung geeignete Epoxidgruppierungen aufweisen, sind ungesättigte Glycidylester oder -ether z.B. Glycidylmethacrylat, Glycidylacrylat, Allylglycidylether, Alkylglycidyl-(meth)acrylat, z.B. Methylglycidyl(meth)acrylat, Glycidyl- bzw. Alkylglycidyl(meth)acrylamid, ein Monoalkylglycidylfumarsäureester, wie Monobutylglycidylfumarsäureester.

Weitere copolymerisierbare Monomere sind Monomere mit blockierten Isocyanatgruppen, wie blockiertes (z.B. mit Caprolactam) Isocyanatoethyl)meth)acrylat, ferner Aminoalkylverbindungen, wie Dimethylaminoethyl(meth)acrylat und tert.-Butylaminoethyl(meth)acrylat, N-Alkoxyalkylamide, wie Methoxy- oder Ethoxymethyl(meth)acrylamid, Hydroxyalkylester, wie Hydroxyethyl- und Hydroxypropyl(meth)acrylat,

ferner die entsprechenden Verbindungen der genannten ( Meth)acrylsäurederivate von anderen ethylenisch ungesättigten Säuren,wie Malein-Fumar-, Itacon, Croton- und Sorbinsäure.

Die Mengenverhältnisse der Komponenten a) und b) können in weiten Grenzen schwanken, je nach dem ob weiche oder harte gegebenenfalls flexible Polymerisateigenschaften gefordert werden. Vorzugsweise werden 10 bis 90 Gew.-% der Komponente a) mit 90 bis 10 Gew.-% der Monomeren b) umgesetzt, wobei die Mengenverhältnisse auf den Gesamtfeststoffgehalt der Komponenten bezogen sind.

Bevorzugte Dispersionscopolymerisate können als Monomereinheiten bezogen auf die Menge der Komponente b) bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% Acrylsäure und/oder Methacrylsäure enthalten, wobei die Summe der Monomereinheiten stets 100% ist. Besonders bevorzugt ist ein Mischungsverhältnis, das 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% Acrylsäure und/oder Methacrylsäure als Monomereinheiten enthält.

Die Herstellung der Dispersion A wird als Emulsionspolymerisation in wäßrigen Medium bei Temperaturen im Bereich zwischen 0 bis 150 ° C, vorzugsweise 20 und 100 ° C, insbesondere 40 und 90 ° C, gegebenenfalls unter Druck, durchgeführt. Die Komponente a) wird beispielsweise als 5 bis 65 gew.-%iges wäßriges System vorgelegt und dann mit den Vinylmonomeren b) unter Zusatz eines Polymerisationsinitiators und gegebenenfalls weiterer üblicher Zusätze wie Emulgatoren und/oder Schutzkolloiden sowie Molekulargewichtsreglern polymerisiert. Das wäßrige Medium des Polymerisationsansatzes kann aus den wäßrigen Systemen der Komponente A) stammen, im allgemeinen wird jedoch noch Wasser dem Ansatz zugegeben, um die besten Bedingungen für die Emulsionspolymerisation zu erreichen.

Die Polymerisation kann wie in der DE-OS 28 11 913 beschrieben durchgeführt werden.

Für die Polymerisation werden gegebenenfalls übliche Hilfsmittel eingesetzt, wie übliche Polymerisationsinitiatoren, Emulgatoren und/oder Schutzkolloide und/oder übliche Molekulargewichtsregler.

Die vorstehenden Polymerisat- bzw. Bindemitteldispersionen sind grundsätzlich selbstvernetzend. Sie können bei Anwesenheit von Vernetzungsmitteln mit geeigneten funktionellen Gruppen fremdvernetzt werden, z.B. beim Erwärmen bzw. Einbrennen.

Als Komponente B) wird eine Polyurethandispersion verwendet. Diese ist bevorzugt anionisch und hat bevorzugt, bezogen auf ihren Festkörper, eine Säurezahl von 5 bis 50, besonders bevorzugt 10 bis 30. Die Herstellung dieser Dispersion erfolgt üblicherweise durch Kettenverlängerung eines Präpolymeren mit endständigen Isocyanatgruppen, nach Neutralisation seiner Säuregruppen und Emulgieren in Wasser gegebenenfalls in Gegenwart von Polyaminen und/oder Hydrazin. Hierbei werden entweder alle Isocyanatgruppen mit Diaminen umgesetzt oder es bleiben bei Verwendung von höheren Polyaminen oder entsprechenden Gemischen Aminstickstoffatome mit reaktionsfähigem Wasserstoff übrig. Mit Hilfe dieses Verfahrens entstehen Produkte mit verbesserter Dispergierbarkeit, d.h. die entstehenden Polyurethane sind in Wasser mit verhältnismäßig wenig sauren Salzgruppen dispergierbar und bilden eine aus feinen Teilchen bestehende organische Phase.

Die Herstellung des isocyanatgruppenhaltigen Präpolymeren kann durch Reaktion von Polyalkoholen mit einer Hydroxylzahl von 10 bis 1800, bevorzugt 50 bis 500 mit überschüssigen Polyisocyanaten bei Temperaturen bis zu 150 ° C, bevorzugt 50 bis 130 ° C in organischen Lösemitteln, die nicht mit Isocyanaten reagieren könne erfolgen. Das Äquvalenzverhältnis von NCO zu OH-Gruppen liegt zwischen 1.5 und 1.0 zu 1.0, bevorzugt zwischen 1.4 und 1.2 zu 1. Die zur Herstellung des Präpolymeren eingesetzten Polyole können niedrigmolekular und/oder hochmolekular sein, aber auch reaktionsträge anionische Gruppen enthalten.

Niedrigmolekulare Polyole ergeben ein härteres Polyurethan als höhermolekulare Polyole. Niedrigmolekulare Polyole haben ein Molekulargewicht von 60 bis zu etwa 400, und können aliphatische, alicyclische oder aromatische Gruppen enthalten. Es werden dabei Mengen bis zu 30 Gew.-% der gesamten Polyol-Bestandteile, bevorzugt etwa 2 bis 20 Gew.-% eingesetzt. Vorteilhaft sind die niedermolekularen Polyole mit bis zu etwa 20 Kohlenstoffatomen je Molekül wie Ethylenglykol, Diethylenglykol, Triethylenglykol, 1,2-Propandiol, 1.3-Propandiol, 1.4-Butandiol, 1,2-Butylenglykol, 1.6-Hexandiol, Trimethylolpropan, Ricinusöl, oder hydriertes Ricinusöl, Di-trimethylolpropanether, Pentaerythrit, 1.2-Cyclohexandiol, 1.4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen.

Um ein NCO-Präpolymeres hoher Flexibilität zu erhalten, sollte ein hoher Anteil eines höhermolekularen, uberwiegend linearen Polyols mit einer bevorzugten Hydroxylzahl von 30 bis 150 zugesetzt werden. Bis zu 97 Gew.-% des gesamten Polyols können aus gesättigten und ungesättigten Polyestern und/oder Polyethern mit einer Molmasse $\overline{M}n$ von 400 bis 5000 bestehen. Als hochmolekulare Polyole sind geeignet aliphatische Polyetherdiole der allgemeinen Formel

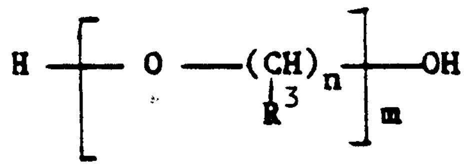

in der $R^3$ = Wasserstoff oder ein niedriger, gegebenenfalls mit verschiedenen Substituenten versehener Alkylrest ist, wobei n = 2 bis 6, bevorzugt 3 bis 4 und m = 2 bis 100, bevorzugt 5 bis 50 ist. Beispiele sind lineare oder verzweigte Polyetherdiole wie Poly-(oxyethylen)glykole, Poly(oxypropylen)glykole und/oder Poly(oxybutylen)glykole. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich $\overline{M}n$ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen wie Ethylenglykol, Propylenglykol, Butylenglykol, Butandiol-1.4, Hexandiol-1.6, Neopentylglykol und andere Diole wie Dimethylolcyclohexan. Es können jedoch auch kleinere Mengen von Polyolen, wie Trimethylolpropan, Glycerin oder Pentaerythrit eingesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydropthalsäure, Cyclohexandicarbon säure, Bernsteinsäure, Adipinsäure, Azelainsäure, Sebazinaäure, Maleinsäure, Fumarsäure, Glutarsäure, Hexachlorheptandicarbonsäure, Tetrachlorphthalsäure und/oder Dimersisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Erfindungsgemäß werden auch Polyesterdiole eingesetzt, die durch Umsetzung eines Lactons mit einem Diol erhalten werden. Sie zeichnen sich durch die Gegenwart einer endständigen Hydroxylgruppen und wiederkehrende Polyesteranteile der Formel

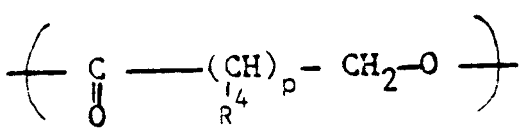

aus. Hierbei ist p bevorzugt 4 bis 6 und der Substituent $R^4$ Wasserstoff, ein Alkyl-, Cycloalkyl- oder Alkoxy-Rest.

Kein Substituent enthält mehr als 12 Kohlenstoffatome. Die gesamte Anzahl der Kohlenstoffatome im Substituenten übersteigt nicht 12 pro Lactonring. Beispiele hierfür sind Hydroxycapronsäure, Hydroxybuttersäure, Hydroxydecansäure und/oder Hydroxystearinsäure. Das als Ausgangsmaterial verwendete Lacton kann durch die folgende allgemeine Formel dargestellt werden

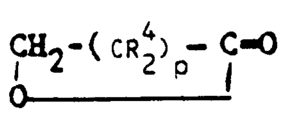

in der p und $R^4$ die bereits angegebene Bedeutung haben.

Für die Herstellung der Polyesterdiole wird das unsubstituierte $\epsilon$-Caprolacton, bei dem p den Wert 4 hat und alle $R^4$-Substituenten Wasserstoff sind, bevorzugt. Die Umsetzung mit Lacton wird durch niedermolekulare Polyole wie Ethylenglykol, 1,3-Propandial, 1,4-Butandiol, Dimethylolcylohexan gestartet. Es können jedoch auch andere Reaktionskomponenten wie Ethylendiamin, Alkyldialkanolamine oder auch Harnstoff mit

Caprolacton umgesetzt werden.

Als höhermolekulare Diole eignen sich auch Polylactamdiole, die durch Reaktion von beispielsweise ε-Caprolactam mit niedermolekularen Diolen hergestellt werden.

Als typische multifunktionelle Isocyanate werden verwendet aliphatische, cycloaliphatische und/oder aromatische Polyisocyanate mit mindestens zwei Isocyanatgruppen pro Molekül. Bevorzugt werden die Isomeren oder Isomerengemische von organischen Diisocyanaten. Als aromatische Diisocyanate eignen sich Phenylendiisocyanat, Toluylendiisocyanat, Xylylendiisocyanat, Biphenylendiisocyanat, Naphthylendiisocyanat und Diphenylmethandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat, und Dicyclohexylmethandiisocyanat. Aliphatische Diisocyanate sind Verbindungen der Formel

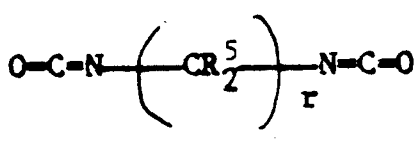

worin r eine ganze Zahl von 2 bis 20, inbesondere 6 bis 8 ist und $R^5$, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexyl-methandiisocyanat. Die zur Bildung des Präpolymeren gebrauchte Polyisocyanat-Komponente kann auch einen Anteil höherwertiger Polyisocyanate enthalten, vorausgesetzt sie wird nicht durch Gelbildungen beeinträchtigt. Als Triisocyanate haben sich Produkte bewährt, die durch Trimerisation oder Oligomersation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan.

Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Polyurethane sine im allgemeinen nicht mit Wasser verträglich, wenn nicht bei ihrer Synthese spezielle Bestandteile eingebaut und/oder besondere Herstellungsschritte vorgenommen werden. So wird in die Komponente B) eine so große Säurezahl eingebaut, daß das neutralisierte Produkt stabil in Wasser zu emulgieren ist. Hierzu dienen Verbindungen, die zwei mit Isocyanatgruppen reagierende H-aktive Gruppen und mindestens eine zur Anionenbildung befähigte Gruppe enthalten. Geeignete mit Isocyanatgruppen reagierende Gruppen sind insbesondere Hydroxylgruppen, sowie primäre und/oder sekundäre Aminogruppen. Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Es werden dazu Alkansäuren mit zwei Substituenten am α-ständigen Kohlenstoffatom eingesetzt. Der Substituent kann eine Hydroxylgruppe, eine Alkylgruppe oder bevorzugt eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindgungen sind Dihydroxypropionsäure, Dihydroxybernsteinsäure und Dihydroxybenzoesäure. Eine besonders bevorzugte Gruppe von Dihydroxyalkansäuren sind die α,α-Dimethylolalkansäuren, die durch die Strukturformel

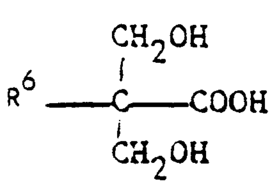

gekennzeichnet sind, worin $R^6$ Wasserstoff oder eine Alkylgruppe mit bis zu etwa 20 Kohlenstoffatomen bedeutet. Beispiele für solche Verbindungen sind 2.2-Dimethylolessigsäure, 2.2-Dimethylolpropionsäure, 2.2-Dimethylolbuttersäure und 2.2-Dimethylolpentansäure. Die bevorzugte Dihydroxyalkansäure ist 2.2-Dimethylolpropionsäure Aminogruppenhaltige Verbindungen sind beispielsweise $\alpha$ $\delta$-Diaminovaleriansäure, 3.4-Diaminobenzoesäure, 2.4-Diaminotoluolsulfonsäure und 2.4-Diamino-diphenylethersulfonsäure. Das Carboxylgruppen enthaltende Polyol kann 3 bis 100 Gew.-%, vorzugsweise 5 bis 50 Gew.-% des gesamten Polyolbestandteiles im NCO-Präpolymeren ausmachen.

Diese Dihodroxyalkansäure wird vor der Umsetzung mit Isocyanaten mindestens anteilweise mit einem tertiären Amin neutralisiert, um eine Reaktion mit den Isocyanaten zu vermeiden.

Die durch die Carboxylgruppen-Neutralisation in Salzform verfügbare Menge an ionisierbaren Carboxylgruppen

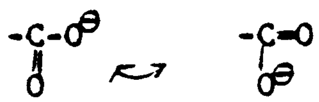

beträgt im allgemeinen wenigstens 0.4 Gew.-% vorzugsweise wenigstens 0.7 Gew.-% bezogen auf den Feststoff. Die obere Grenze beträgt etwa 6 Gew.-%. Die Menge an Dihydroxyalkansäuren im unneutralisierten Präpolymeren ergibt eine Säurezahl von wenigstens 5, vorzugsweise wenigstens 10. Die obere Grenze der Säurezahl liegt bei 60, vorzugsweise bei 40 bezogen auf Feststoff.

Die erfindungsgemäß verwendeten NCO-Präpolymere können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden.

Beispiele sind in den DE 26 24 442 und DE 32 10 051 beschrieben. Die Reaktionstemperatur beträgt bis zu 150 ° C, wobei eine Temperatur im Bereich von 50 bis 130 ° C bevorzugt wird. Die Umsetzung wird fortgesetzt, bis praktisch alle Hydroxylfunktionen umgesetzt sind.

Das NCO-Präpolymer enthält wenigstens etwa 0.5 Gew.-% Isocyanatgruppen, vorzugsweise wenigstens 1 Gew.-% NCO bezogen auf Feststoff. Die obere Grenze liegt bei etwa 15 Gew.-% vorzugsweise 10 Gew.-%, besonders bevorzugt bei 5 Gew.-%.

Die Umsetzung kann gegebenenfalls in Gegenwart eines Katalysators wie Organozinnverbindungen und/oder tertiären Aminen durchgeführt werde. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Verwendbare Lösemittel sind beispielsweise Dimethylformamid, Ester, Ether wie Diethylenglykol-dimethylether, Ketoester, Ketone wie Methylethylketon und Aceton, mit Methoxygruppen substituierte Ketone wie Methoxy-hexanon, Glykoletherester, chlorierte Kohlenwasserstoffe, aliphatische und alicyclische Kohlenwasserstoffpyrrolidone wie N-Methylpyrrolidon, hydrierte Furane, aromatische Kohlenwasserstoffe und deren Gemische. Die Menge an Lösemittel kann in weiten Grenzen variieren und sollte zur Bildung einer Präpolymer-Lösung mit geeigneter Viskosität ausreichen. Meistens genügen 0.01 bis 15 Gew.-% Lösemittel, vorzugsweise 0.02 bis 8 Gew.-% Lösemittel bezogen auf den Festkörper. Sieden die gegebenenfalls nicht wasserlöslichen Lösemittel niedriger als das Wasser, so können sie nach der Herstellung der harnstoffhaltigen Polyurethan-Dispersion durch Vakuumdestillation oder Dünnschichtverdampfung schonend abdestilliert werden. Höhersiedende Lösemittel sollten wasserlöslich sein und verbleiben in der wäßrigen Polyurethan-Dispersion, um das Zusammenfließen der Polymer-Teilchen während der Filmbildung zu erleichtern. Besonders bevorzugt wird als Lösemittel N-Methylpyrrolidon, gegebenenfalls im Gemisch mit Ketonen, wie Methyl-ethyl-keton.

Die anionischen Gruppen des NCO-Präpolymeren werden mit einem tertiären Amin mindestens teilweise neutralisiert. Die dadurch geschaffene Zunahme der Dispergierbarkeit in Wasser reicht für eine unendliche Verdünnbarkeit aus. Sie reicht auch aus, um das neutralisierte harnstoffgruppenhaltige Polyurethan beständig zu dispergieren. Geeignete tertiäre Amine sind beispielsweise Trimethylamin, Triethylamin, Dimethylamin , Diethylamin , N-Methylmorpholin. Das NCO-Präpolymer wird nach der Neutralisation mit Wasser verdünnt und ergibt dann eine feinteilige Dispersion. Kurz danach werden die noch vorhandenen Isocyanatgruppen mit Di- und/oder Polyaminen mit primären und/oder sekundären Aminogruppen als Kettenverlängerer umgesetzt. Diese Reaktion führt zu einer weiteren Verknüpfung und Erhöhung des Molekulargewichts. Die Konkurrenzreaktion zwischen Amin und Wasser mit dem Isocyanat muß, um optimale Eigenschaften zu erhalten, gut abgestimmt (Zeit, Temperatur, Konzentration) und für eine reproduzierbare Produktion gut überwacht werden. Als Kettenverlängerer werden wasserlösliche Verbindungen

bevorzugt, weil sie die Dispergierbarkeit des polymeren Endproduktes in Wasser erhöhen. Bevorzugt werden organische Diamine, weil sie in der Regel die höchste Molmasse aufbauen, ohne das Harz zu gelieren. Voraussetzung hierfür ist jedoch, daß das Verhältnis der Aminogruppen zu den Isocyanatgruppen zweckentsprechend gewählt wird. Die Menge des Kettenverlängerers wird von seiner Funktionalität, vom NCO-Gehalt des Präpolymeren und von der Dauer der Reaktion bestimmt. Das Verhältnis der reaktiven Aminogruppe im Kettenverlängerer zu den NCO-Gruppen im Präpolymeren sollte in der Regel geringer als 1:1 und vorzugsweise im Bereich von 1:1 bis 0.75 : 1 liegen. Die Anwesenheit von überschüssigen aktiven Wasserstoff, insbesondere in Form von primären Aminogruppen, kann zu Polymeren mit unerwünscht niedriger Molmasse führen.

Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1.4-Butylendiamin, Piperazin, 1.4-Cyclohexyldimethylamin, Hexamethylendiamin-1.6, Trimethylhexamethylendiamin, Methandiamin, Isophorondiamin, 4.4′-Diaminodicyclohexylmethan und Aminoethylethanolamin. Bevorzugte Diamine sind Alkyl- oder Cycloalkyldiamine wie Propylendiamin und 1-Amino-3-aminomethyl-3.5.5-trimethylcyclohexan.

Die Kettenverlängerung kann wenigstens teilweise mit einem Polyamin erfolgen, das mindestens drei Aminogruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind die Alkyl- oder Cycloalkyltriamine wie Diethylentriamin. Als Kettenverlängerer können auch Diamine verwendet werden, deren primäre Aminogruppen als Ketimin geschützt sind und die bei Answesenheit von Wasser durch Abspaltung des Ketons reaktiv werden. Um ein Gelieren bei der Kettenverlängerung zu verhindern, können bei sehr hohem NCO-Gehalt auch kleine Anteile von Monoaminen wie Ethylhexylamin zugesetzt werden.

Als Komponente B) kann auch eine Polyurethandispersion verwendet werden, die wie vorstehend hergestellt wurde, wobei jedoch die Polyurethandispersionen anschließend mit radikalisch polymerisierbaren ethylenisch ungesättigten Monomeren versetzt und weiter polymerisiert wurde. Als radikalisch polymerisierbare Monomere können beispielsweise solche verwendet werden, wie sie für die Komponente A)b) definiert wurden. Die Polymerisation kann durch langsamen Zulauf der Polymeren unter Einsatz radikalischer Initiatoren erfolgen. Derartige Polyurethandispersionen können beispielsweise hergestellt werden wie in der DE-B-19 53 348 und der DE-A-23 63 307 beschrieben.

Als Komponente (C) kann den erfindungsgemäßen wäßrigen Überzugsmitteln ein Anreibeharz und/oder Anreibehilfsmittel zugesetzt werden. Als Anreibeharze kommen beispielsweise Polyesterharze, Amin-Formaldehyd-Kondensationsharze, wie Melaminharze, und/oder Acrylatharze in Frage.

Polyesterharze im Sinne der Erfindung sind nach Neutralisation in Wasser dispergierbar und können sowohl ölfrei wie auch ölmodifiziert sein. Sie werden durch Umsetzung von polyfunktionellen Alkoholen, polyfunktionellen Carbonsäuren und gegebenenfalls einem Öl bzw. einer Ölfettsäure bei Temperaturen von 120 bis 240 °C erhalten. Ihre zahlenmittleren Molmassen liegen zwischen 500 und 5000, ihre Hydroxylzahlen zwischen 0 und 200, und ihre Säurezahlen zwischen 5 und 80, bevorzugt 20 bis 50. Die eingesetzten Öle werden im allgemeinen vor der Umsetzung mit den Polycarbonsäuren durch Alkoholyse in das "Monoglycerid" umgewandelt. Durch Auswahl der Mengen und Art der verschiedenen Komponenten können die physikalischen Eigenschaften weitgehend variiert werden.

Als polyfunktionelle Alkohole werden bevorzugt lineare oder verzweigte aliphatische, cycloaliphatische und/oder araliphatische Alkohole mit 2 bis 6, vorzugsweise 2 bis 4 an nicht-aromatische C-Atome gebundene OH-Gruppen und 2 bis 24 C-Atomen pro Molekül. Für den Aufbau von ölfreien Polyestern werden Diole bevorzugt wie Ethylenglykol, Propylenglyol, Butandiol-1,4, Neopentylglykol, Hexandiol-1.6, Pivalinsäureneopentylglykolester, Cyclohexandimethanol, hydriertes Bisphenol, A, hydroxyalkylierte Bisphenole, 4,4′-Di-(hydroxymethyl)diphenylmethan, 1.3-Di(hydroxyethyl)-5.5-dimethylhydantoin, Diethylenglykol, Dipropylenglykol, Polyetherglykole, wie Poly(oxytetramethylen)glykol, 2.4-Dihydroxypropan. Einige bevorzugte Diole sind Propylenglykol, Butandiol-1.4, Hexandiol-1.6 und Neopentylglykol. Zur Steigerung der Funktionalität werden drei oder höherwertige Polyalkohole eingesetzt wie Glycerin, Trimethylolpropan, Di-Trimethylolpropan, Pentaerythrit, Depentaerythrit, Trimethylolethan, 1.2.6-Hexantriol, Trishydroxyethylisocyanurat, sowie Zuckeralkohole, wie Mannit, Sorbit oder Methylglykosid. Anteilweise können, besonders bei Verwendung von Tricarbonsäuren, kettenabbrechende Monoalkohole, wie Isodecylalkohol, Cyclohexanol, Benzylalkohol, hydrierter Abietinalkonol oder Alkoxyalkanole eingesetzt werden. Die Auswahl der Alkoholkomponenten richtet sich unter anderem nach dem gewünschten Gehalt an freien Hydroxylgruppen, nach der Menge

eingesetzter Monocarbonsäuren und der gewünschten Löslichkeit und Verdünnbarkeit.

Als polyfunktionelle Carbonsäuren werden lineare oder verzweigte aliphatische, cycloaliphatische und/oder aromatische mehrbasische Carbonsäuren, vorzugsweise Di-, Tri- und Tetracarbonsäuren mit 4 bis 12 C-Atomen pro Molekül oder deren veresterungsfähige Derivate (z.B. Anhydride oder Ester) verwendet. Typische Polycarbonsäuren sind o-Phthalsäure, Iso- und Terephthalsäure, Tetra- und Hexahydrophthalsäure, Trimellithsäure, Pyromellithsäure sowie, falls herstellbar, ihre Anhydride oder Ester mit niedrigen Alkoholen oder Glykolen. Als aliphatische Dicarbonsäuren finden Verwendung Maleinsäureanhydrid, Fumarsäure, Itaconsäure, Acetylendicarbonsäure, Bernsteinsäureanhydrid, Adipinsäure, Azelainsäure, Sebazinsäure, die niederen oder höheren Homologen sowei ihre alkylsubstituierten Derivate. Zum Einstellen der Funktionalität und Härte können die gegebenenfalls ölmodifizierten Polyester vorteilhaft auch eine kleine Menge einbasischer Säure enthalten, wie Benzoesäure, tert. Butylbenzoesäure, Abietinsäure oder ähnliche monobasische aromatische Säuren. Zur Herstellung von Harzen mit höheren Säurezahlen werden als Polycarbonsäuren außer Trimellithsäureanhydrid auch Addukte von Maleinsäureanhydrid an ungesättigte Fettsäuren oder Öle verwendet. Bevorzugt enthalten mindestens einen Teil der Säurekomponente eine aliphatische Dicarbonsäure mit einer C4 bis C8-Kohlenwasserstoffkette. Es können auch hydroxylgruppenhaltige Carbonsäuren wie 5-Hydroxypentancarbonsäure oder ihr Lacton, Dimethylolpropionsäure, Hexahydrobenzoesäure oder Weinsäure eingesetzt werden.

Ölfreie Polyester werden überwiegend mit Diolen hergestellt, ölmodifizierte Polyester oder Alkydharze enthalten überwiegend Tri- oder Pentaalkohole als Veresterungsmittel. Die Modifizierung erfolgt entweder mit natürlichen nicht-trockenden oder trocknenden Ölen oder werden verwendet als nicht-trocknende Öle Kokosnußöl, Baumwollsamenöl, Erdnußöl, Olivenöl, Ricinusöl und dergleichen. Trocknende oder halbtrocknende Öle sind Leinsamenöl, Tallöl, Sojaöl, Safranöl, Perillaöl, Holzöl, Oiticicaöl, Mohnsamenöl, Sonnenblumenöl, Heringsöl und dergleichen. Diese Öle können als solche oder in Form der entsprechenden Ölfettsäuren verwendet werden. Bevorzugt werden Öle, die im Film nicht zum Vergilben neigen. Die natürlichen Fettsäuren können, gegebenenfalls in Form ihrer Methylester, katalytisch isomerisiert werden. Durch Dehydratisierung von Ricinusöl bzw. Ricinusölfettsäure werden bevorzugte Ausgangsmaterialien für Alkydharze hergestellt. Es können jedoch auch rein synthetische Fettsäuren wie 2-Ethylhexansäure oder Versaticsäure, am besten über den vorgefertigten Glycidylester, zugesetzt werden. der Gehalt an Fettsäuren kann je nach den gewünschten Eigenschaften bis zu etwa 60%, bevorzugt 20 bis 50%, betragen.

Um die Wasserverdünnbarkeit zu erföhen, können die Harze direkt bis auf eine höhere Säurezahl gefahren werden oder es wird vorteilhafterweise ein höhermolekularer OH-gruppenhaltiger Polyester mit einem Säureanhydrid, bevorzugt cycloaliphatischen Säureanhydrid umgesetzt. Einen ähnlichen Effekt erzielt man durch Einbau von Trimellithsäureanhydrid, den Maleinsäureanhydrid-Addukten an isoliert oder konjugiert ungesättigten Fettsäuren oder von Dimethylolpropionsäure.

Die Polykondensation erfolgt in der Schmelze oder mit Hilfe von Lösemitteln als aceotropes Verfahren bei Reaktionstemperaturen zwischen 150 bis 240 ° C. Nach Erreichen der gewünschten Abstellwerte (Viskosität, Säurezahl) wird auf 100 bis 120 ° C abgekühlt und mit Glykolethern oder alkoholischen Lösemitteln auf einen Festkörper von 60 bis 90 Gew.-% verdünnt. Seine Höhe richtet sich nach der Viskosität der erhaltenen Lösung. Es wird eine gut verarbeitbare Lösung mit möglichst hohem Festkörper angestrebt.

Amin-Fomaldehyde-Kondensationsharze, die als Komponente C) eingesetzt werden können, entstehen beispielsweise durch Reaktion von Aldehyden mit Harnstoff, N-Alkylharnstoff, Dicyandiamid, verschiedenen Triazinen, wie Melamin, Benzoguanamin und Acetoguanamin oder ihren Mischungen. Die Aldhyde können dabei monofunktionell, aber auch polyfunktionell sein. Beispiele hierfür sind Formaldehyd und seine Polymerisationsprodukte, wie Paraformaldehyd, Polyoxymethylen, Trioxan oder aliphatische und cyclische Aldehyde, wie Glyoxal, Acetaldehyd, Acrolein, Propionaldehyd, Butyraldehyd und Furfural. Je nach Reaktionsbedingungen (pH-Wert, Temperatur) und Methylolierungsgrad werden Harze mit verschiedenen Molmassen und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkohol-, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, sowie Ethoxyethanol oder Butoxyethanol.

Sollen Alkohole mit mehr als 4 C-Atomen eingebaut werden, so wird die Methylolgruppe erst mit einem

niedrigeren Alkohol verethert und anschließend der höhere Alkohol durch Umetherung eingeführt. Die bevorzugten Alkohole sind niedere aliphatische Monoalkohole, wie Methanol und/oder Butanol und seine Isomeren. Besonders bevorzugt werden Melaminharze, die mit 3 bis 6 Molen Formaldhyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharztypen.

Beispiele für als Komponente C) verwendbare Acrylatharze sind insbesondere Poly(meth)acrylatharze mit einer zahlenmittleren Molmasse $\overline{M}n$ von 10 000 bis 500 000, insbesondere von 40 000 bis 200 000 (gemessen durch Gelpermeationschromatographie bezogen auf Polystryol). Sie weisen bevorzugt eine Glasübergangstemperatur von -50 bis +150°C (insbesondere - 15 bis +100°C, ganz besonders +20 bis +50°C, errechnet aus den Glasübergangstemperaturen der Homopolymerisate) auf. Die Säurezahl liegt vorzugsweise bei 0 bis 50 (mgKOH pro g Festharz), insbesondere bei 10 bis 30. Die Hydroxylzahl beträgt bevorzugt 60 bis 250 (umgerechnet in mgKOH pro g Festharz), insbesondere 80 bis 200.

Die Viskosität derartiger Poly(meth)acrylatharze liegt bevorzugt bei 5 bis 100 Pa•s, insbesondere bei 10 bis 50 Pa•s, gemessen 50%iger Lösung in Butoxyethanol bei 25°C.

Derartige Poly(meth)acrylatharze können ohne Verwendung von Emulgatoren, Dispersionsstabilisatoren und/oder Schutzkolloiden mit Hilfe radikalischer Katalysatoren in mit Wasser verdünnbaren organischen Lösemitteln bei Temperaturen von 50 bis 160°C hergestellt werden. Es ist dabei wesentlich, daß eine für eine Lösungspolymerisation hohe mittlere Molmasse wie vorstehend angegeben erreicht wird, wie es sich auch in der hohen Viskosität der Lösung zu erkennen gibt. Die Bestimmung der zahlenmittleren Molmasse erfolgt mittels Gelpermeationschromatographie und wird auf Polystyrol bezogen. Eine Steigerung der Viskosität erzielt man bei Lösungspolymerisaten üblicherweise durch Reduktion der Katalysatormenge, wobei durch den hohen Lösemittelgehalt und der in den Monomeren vorhandenen Stabilisatoren die Polymerisationsausbeute unvollständig wird. Eine bessere Lösung findet sich in der Kombination von höherem Katalysatorgehalt und Zusatz von polyungesättigten Monomeren. An ihrer Stelle können auch Monomere mit reaktiven Gruppen eingebaut werden, die während der Polymerisation untereinander reagieren können, wodurch das polyungesättigte Monomere "in situ" entsteht. Durch Auswahl geeigneter Säure- und Hydroxylzahlen werden soviel hydrophile Gruppen in das Molekül eingeführt, daß es nach Neutralisation mit basischen Verbindungen mit Wasser auf einen Festkörper von 15 bis 45 Gew.-% verdünnt werden kann. Bei Einsatz eines Acrylatharzes mit einer niedrigen Säurezahl ist eine hohe Hydroxylzahl anzuwenden und umgekehrt. So kann beispielsweise mit einer Säurezahl von 20 und einer Hydroxylzahl von 150 ein wasserverdünnbares Produkt hergestellt werden.

Bevorzugt besteht die Zusammensetzung des Polymerisatharzes bzw. Poly(meth)acarylatharzes (Komponente C) ) aus

| | |
|---|---|
| a. 0 bis 12 Gew.-% | $\alpha,\beta$-ungesättigten Carbonsäuren, |
| b. 10 bis 65 Gew.-% | ethylenisch mono-ungesättigte, hydroxylgruppenhaltige Monomere, |
| c. 0.1 bis 7 Gew.-% | ethylenisch polyungesättigte Monomere, |
| d. 16 bis 90 Gew.-% | ethylenisch monoungesättigte Monomere, die keine weiteren reaktiven Gruppen enthalten. |

Als ethylenisch ungesättigte Monomere kommen praktisch alle radikalisch polymerisierbaren Monomeren in Frage, wobei jedoch die üblichen Einschränkungen für Copolymerisationen gelten, die durch das Q- und e-Schema nach Alfrey und Price, bzw. die Copolymerisationsparameter vorgegeben sind ( vgl. z.B. Brandrup und Immergut, Polymer Handbook, 2nd ed. John Wiley & Sons, New York (1975) ).

Als $\alpha,\beta$-ungesättigte Carbonsäuren werden Monomere der allgemeinen Formel

$$R\text{-}CH=CR'\text{-}COOH$$

eingesetzt, worin

R = -H, -COOH, $-C_nH_{2n+1}$ oder $-COOC_nH_{2n+1}$

R′ = -H, oder $-C_nH_{2n+1}$′

n = 1 bis 6

bedeuten.

Beispiele hierfür sind Acrylsäure, Methacrylsäure, Crotonsäure, Fumarsäure, Maleinsäure-monoalkylester, Itaconsäure-monoalkylester. Bevorzugt sind Acrylsäure und Methacrylsäure.

Unter einpolymerisierbaren, hydroxylgruppenhaltigen Monomeren werden solche verstanden, die außer einer polymerisierbaren ethylenisch ungesättigten Gruppe noch mindestens eine Hydroxylgruppe an einem $C_2$ bis $C_{20}$ Kohlenstoffgerüst enthalen. Es sind hauptsächlich ungesättigte Veresterungsprodukte der

allgemeinen Formel

R″-CH = CR′-X-R‴

worin

R′ wie vorstehend definiert ist,
R″ = -R′ oder $-COOC_nH_{2n+1}$
n = 1 bis 6
R‴ = eine lineare oder verzweigte $C_{1-6}$-Alkylgruppe mit 1 bis 3 OH-Gruppen und
X = -COO-, -CONH-, $-CH_2O$- oder -O-

ist.

Besonders geeignet sind (Meth)acrylsäure-hydroxyalkylester wie ß-Hydroxyethylacrylat, ß-Hydroxypropylmethacrylat, Butandiol-1,4-monoacrylat, Propylenglykolmonoacrylat, 2.3-Dihydroxypropylmethacrylat, Pentaerythritmonomethacrylat, Polypropylenglykol-monoacrylat oder auch Fumarsäure-dihydroxyalkylester, deren lineare, verzweigte oder cyclische Alkylgruppe 2 bis 20 Kohlenstoffatome enthält. Es können jedoch auch N-Hydroxyalkyl(meth)acrylamide oder N-Hydroxyalkyl-fumarsäure-mono- oder diamide, wie N-Hydroxyethyl-acrylamid oder N-(2-Hydroxypropyl)methacrylamideingesetzt werden. Besonders elastische Eigenschaften sind beim Einsatz eines Reaktionsproduktes von Hydroxyalkyl-(meth)acrylat mit ε-Caproclacton zu erhalten. Andere hydroxylgruppenhaltige Verbindungen sind Allylalkohol, Monovinylether von Polyolen, besonders Diolen, wie Monovinylether des Ethylenglykols und Butandiols, sowie hydroxylgruppenhaltige Allylether oder -ester wie 2.3-Dihydroxypropyl-monoallylether, Trimethylolpropan-monoallylether oder 2.3-Dihydroxypropansäure-allylester. Besonders geeignet sind Hydroxyethyl(meth)acrylate.

Die Hydroxylgruppen können auch dadurch eingebaut werden, daß carboxylgruppenhaltige Copolymerisate mit Alkylenoxiden, wie Ethylenoxid, Propylenoxid, Butylenoxid, umgesetzt werden.

Unter ethylenisch polyungesättigten Monomeren werden Verbindungen mit mindestens 2 radikalisch polymerisierbaren Doppelbindungen nach der allgemeinen Formel
$R-CH=CR'-A-(-CR'=CH-R)_m$, m = 1 bis 3, bevorzugt m = 1 ist.
verstanden, wobei außer den weiter oben angegebenen Bedeutungen A das allgemeine, tragende chemische Grundgerüst für die reaktive Doppelbindung ist. Beispiele für A sind der o-, m- oder p-Phenylrest und Reste der Formel -X-Alkyl-X′-,worin Alkyl bevorzugt 2 bis 18 C-Atome aufweisen,X und X′ gleiche oder verschiedene verbindende Gruppen,z.B. -O-, -CONH-, -COO-, -NHCOO- oder -NH-CO-NH- sind.A kann zum Beispiel ein Benzolring wie im Divinylbenzol sein,der gegebenenfalls auch substituiert sein kann wie p-Methyldivinylbenzol oder o-Nonyldivinylbenzol.

Andere geeignete Monomere sind Reaktionsprodukte aus Polyalkoholen, besonders Dialkoholen, mit α,β-ungesättigten Carbonsäuren, wie sie schon definiert sind. Beispiele hierfür sind Ethandiol-diacrylat, Ethylenglykoldimethacrylat, 1.4-Butandiol-diacrylat, 1.6-Hexandiol-diacrylat, Neopentylglykol-dimethacrylat, Triethylenglykol-dimethacrylat, Polyglykol-400-diacrylat, Glycerin-dimethacrylat, Trimethylolpropan-triacrylat und/oder Pentaerythrit-diacrylat. Urethan- und amidgruppenhaltige polyfunktionelle Monomere werden hergestellt durch Reaktion von beispielsweise Hexandiisocyanat oder Methacrylsäure-ß-isocyanatoethylester mit Hydroxethyl(meth)acrylat oder (Meth)acrylsäure. Beispiele für anders aufgebaute geeignete Verbindungen sind Allylmethacrylat, Diallylphthalat, Butandioldivinylether, Divinylethylenharnstoff, Divinylpropylenharnstoff, Maleinsäurediallylester, Bis-maleinimide, Glyoxabisacrylamid und/oder das Reaktionsprodukt von Epoxidharz mit (Meth)acrylsäure oder Fumarsäurehalbestern. Bevorzugt wird der Einsatz von difunktionellen ungesättigten Monomeren wie Butandiol-diacrylate oder Hexandiol-diacrylat. Bei Verwendung von Glycidylmethacrylat und Methacrylsäure entsteht das entsprechende Glycerindimethacrylat automatisch bei der Poly-merisation. Die Art und Menge an polyungesättigten Monomeren ist mit den Reaktionsbedingungen (Katalysatoren, Reaktionstemperatur, Lösemittel) sorgfältig abzustimmen, um die gewünschte hohe Viskolsität ohne Gelierungen zu erhalten.

Die Auswahl der ungesättigten Monomeren, die keine weiteren reaktiven Gruppen enthalten, erfolgt nach den mechanischen und Verträglichkeitseigenschaften. Es werden Acrylsäurealkylester, Methacrylsäure-alkylester und/oder Maleinsäure- oder Furmarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromaten-Typ wie Styrol, α-substituierte Styrole wie α-Methylstyrol, o-,m- und p.-Alkylstyrole wie Vinyltoluol oder p-tert-Butylstyrol, halogenierte Vinylbenzole wie o-oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornylmethacrylat, Dihydrodicyclopentadienylmethacrylat,Acrylamid oder Acrylnitril. "Weiche" Monomere sind

dagegen Acrylsäureester mit einer langen Alkoholkette wie n-Butylacrylat, Isobutylacrylat, tert.-Butylacrylat und/oder 2-Ethylhexylacrylat. Es können auch ungesättigte Ether wie Ethoxyethylmethacrylat oder Tetrahydrofurfurylacrylat eingesetzt werden. Monomere vom Vinylester-Typ , vorzugsweise Vinylester können bei Einhaltung geeigneter Reaktionsbedingungen anteilweise auch verwendet werden. Bevorzugte Monomerkombinationen sind beispielsweise Acrylat- und/oder Methacrylat-Monomere, (Meth)acrylsäure, Hydroxyalkyl(meth)acrylsäureester als mono-olefinisch ungesättigte Verbindungen und Divinylbenzol, Butandiol-diacrylat oder Hexandiol-diacrylat als mehrfach ungesättigte Verbindungen.

Die Copolymerisation erfolgt in bekannter Weise durch Lösungspolymerisation unter Zusatz von radikalischen Initiatoren, sowei gegebenenfalls Molekulargewichtsreglern. Sie erfolgt in einer Flüssigkeit, die für das Monomere ein Lösemittel ist und das gebildete Polymer im Lösungszustand hält. Der Gehalt an Monomeren, bzw. Polymeren beträgt dabei etwa 30 bis 70 Gew.-%. Es wird eine Lösungspolymerisation in organischen Lösemitteln bevorzugt, die mit Wasser verdünnbar sind. Solche Lösemittel sind beispielsweise Ethylenglykol, Ethoxyethanol, Butoxyethanol , Diethylenglykol, Triethylenglykol, Diethylenglykol-dimethylether, Propylenglykol, Methoxypropanol, Ethoxyethanol, Dipropylenglykol-monomethylether, Dipropylenglykoldimethylether, Diacetonalkohol, Ethanol, Isopropanol, n-Butanol, sek.-Butanol, tert.-Butanol, Aceton, Methoxypropanon, Dioxan, Tetrahydrofuran, N-Methylpyrrolidon oder ihren Gemischen. Zur Verlaufsverbesserung kann auch anteilweise ein nicht-wasserlösliches, hochsiedendes Lösemittel zugesetzt werden wie Hexylenglykol, Phenoxyethanol oder 2.2.4-Trimethylpentandiol1.3-monoisobutyrat. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs getrennt zudosiert. Als Katalysatoren , die on organischen Lösemitteln löslich sind, werden 0.1 bis 5 Gew.-% , bevorzugt 0.5 bis 3 Gew.-% bezogen auf die eingesetzte Monomeren-Menge an Peroxiden und/oder Azoverbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid, und Perester wie tert.-Butylperoctoat oder tert.-Butylperbenzoat. Thermisch zerfallende Azoverbindungen sind beispielsweise 2.2′-Azo-bis-(2-cyanopropan),1.1′-Azo-bis-cyclohexancarbonitril, 4.4′-Azo-bis-(4-cyanopentansäure. Durch den Einsatz von Reglern kann das Molekulargewicht in bekannter Weise herarbgesetzt werden. Bevorzugt werden hierzu Mercaptane, halogenhaltige Verbindungen und andere radialübertragende Substanzen eingesetzt. Besonders bevorzugt sind n-oder tert.-Dodecylmercaptan, Tetrakismercaptoacetylpentaerythrit, tert.-Butyl-o-thiokresol, Thiosalicylsäure, Mercaptoessigsäure, Buten-1-o1- oder dimeres $\alpha$-Methylstyrol.

Um das emulgatorfreie Poly(meth)acrylatharz in eine wäßrige Lösung bzw. Dispersion überzuführen, werden die Carboxylgruppen neutralisiert und anschließend mit Wasser verdünnt. Als Neutralisationsmittel eigen sich Ammoniak, primäre, sekundäre und tertiare Alkyl- oder Alkanol-amine, sowie Aminoether oder auch quaternäre Ammoniumhydroxide. Beispiele hierfür sind Diethylamin, Triethylamin, Propylamin, Butylamin, Dimethylaminoethanol, Diisopropanolamin, Triethanolamin, Triisopropanolamin, 2-Amino-2-methyl-1-propanol, 2-Dimethylamino-2-methylpropanol-1, Morpholin oder Methyl-morpholin. Die Auswahl des Amin-Neutralisationsmittels beeinflußt die Stabilität der wäßrigen Dispersion und muß dementsprechend geprüft werden. Aufgrund ihrer leichten Flüchtigkeit werden Ammoniak, Triethylamin, Dimethylaminoethanol und N-Methyl-Morpholin bevorzugt. Die obere Grenze der zugesetzten Aminmenge ergibt sich aus dem 100%igen Neutralisationsgrad der vorhandenen Carboxylgruppen. Die untere Grenze ist durch die Stabilität der hergestellten Dispersion bedingt. Der pH-Wert des neutralisierten Überzugsmittels soll etwa 6.5 bis 9.0 betragen. Liegt der pH-Wert zu niedrig, so treten Dispergierschwierigkeiten zuf - das Harz fällt aus. Niedrig siedende Lösemittel können gegebenenfalls nach Neutralisation und Verdünnen mit Wasser durch Destillation unter Normaldruck oder im Vakuum entfernt werden.

Als Anreibeharze C können auch Mischpolymere verwendet werden, die erhältlich sind durch Umsetzung von

A) 80 bis 95 Gew.-% eines Copolymerisats aus

a) 0.5 bis 40 Gew.-% N[N,N-Di-$C_{1 bis 4}$-alkylamino-$C_{1 bis 8}$-alkyl] (meth)acrylamide und/oder einem Gemisch von N,N-Di-$C_{1 bis 4}$-alkylamino-$C_{1 bis 8}$-alkyl(meth)acrylaten und N-substituierte (Meth)acrylamiden und/oder (Meth)acrylamid, wobei das Verhältnis der Amino(meth)acrylate zu den Amido(meth)-acrylaten 1:2 bis 2:1 sein soll,

b) 10 bis 40 Gew.-% Hydroxi-$C_{2-8}$-alkyl(meth)acrylate,

c) 20 bis 89.5 Gew.-% copolymerisierbare $\alpha,\beta$-olefinisch ungesättigte Verbindungen, und

B) 5 bis 20 Gew.-% eines unverkappte und gegebenenfalls auch verkappte Isocyanatgruppen aufweisenden Polyisocyanats, das Biuret-, Urethan- oder IsocyanuratGruppen aufweist.

Diese Harze werden beschrieben in der Patentanmeldung mit der Bezeichnung "Pigmentdispersion und deren Verwendung", (DE-OS 36 28 123.9) der gleichen Anmelderin vom gleichen Anmeldetag.

Bei der Herstellung der erfindungsgemäßen wäßrigen Überzugsmittel können die Komponenten A) und B) sowie Pigmente und übliche Hilfs- und Zusatzstoffe sowie Lösemittel in beliebiger Reihenfolge miteinander vermischt werden. Nach Neutralisation mit beispielsweise Ammoniak, Aminen und/oder Aminoalkoholen wird mit Wasser auf die gewünschte Konzentration verdünnt. Bevorzugt werden farbgebende Pigmente mit dem gegebenenfalls verwendeten Anreibeharz (Komponente C) angerieben und dann mit den Komponenten A),B) und weiteren Hilfs- und Zusatzstoffen in beliebiger Reihenfolge vermischt. Metallische oder nicht-metallische Effektpigmente (z.B. Interferenzpigmente) können zu einem beliebigen Zeitpunkt zugemischt werden. Sie werden jedoch nicht mit dem Anreibeharz angerieben. Beispielweise werden sie mit der Komponente A) und/oder B) vermischt und dann in beliebiger Reihenfolge den anderen Komponenten zugefügt.

Wie vorstehend erwähnt, können in die erfindungsgemäßen wäßrigen Überzugsmittel verschiedene Pigmente, nämlich farbgebende Pigmente auf anorganischer Basis, beispielsweise Titandioxid über Eisenoxid bis zu Rußen aberauch andere, und auf organischer Basis, z.B. Küpenfarbstoffe, Chinacridone, Perylene, Phthalocyanine, sowie übliche Metallpigmente (z.B. handelsübliche Aluminiumbronzen, Edelstahlbronzen) und nicht-metallische Effektpigmente ( z.B. Perlglanz- bzw. Interferenzpigmente) eingearbeitet werden. Die erfindungsgemäßen Überzugsmittel eigen sich besonders zur Einarbeitung derartiger Metallpigmente bzw. Effektpigmente, da sie sich positiv auf die Ausrichtung der Metall- bzw. Effektpigmente auswirken. Die Pigmentierungshöhe liegt in üblichen Bereichen.

Weiterhin können den erfindungsgemäßen Überzugsmitteln übliche rheologische anorganische oder organische Additive zugesetzt werden. So wirken als Verdicker beispielsweise wasserlösliche Celluloseether wie Hydroxyethylcellulse, Methylcellulose oder Carboxymethlycellulose, sowie synthetische Polymere mit ionischen und/oder assoziativ wirkenden Gruppen wie Polyvinylalkohol, Poly(meth)acrylamid, Poly(meth)-acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder Polyacrylate. Besonders bevorzugt werden carboxylgruppenhaltige Polyacrylat-Copolymere mit einer Säurezahl von 60 bis 780, bevorzugt 200 bis 500, die auch zur Benetzung der Metalleffektpigmente verwendet werden können.

Lösemittel und Neutralisationsmittel, wie sie beispielsweise für die Poly(meth)acrylatharze vorstehend beschrieben werden, können zur Korrektur der rheologischen Eigenschaften sowie des pH-Wertes und zur Verbesserung der Lagerbeständigkeit den erfindungsgemäßen Überzugsmitteln zugesetzt werden.

Die erfindungsgemäßen Überzugsmittel weisen im allgemeinen einen Festkörpergehalt von etwa 15 bis 50 Gew.-% auf. Der Festkörpergehalt variiert mit dem Verwendungszweck des Überzugsmittels. für Metalliclacke liegt er beispielsweise bevorzugt bei 17 bis 25 Gew.-%. Für unifarbige Lacke liegt er höher, beispielsweise bei 30 bis 45 Gew.-%.

Die erfindungsgemäßen Überzugsmittel können zusätzlich übliche organische Lösemittel enthalten. Deren Anteil wird möglichst gering gehalten. Er liegt beispielsweise unter 15 Gew.-%.

Die erfindungsgemäßen wäßrigen Überzugsmittel können bereits bei niedrigen Temperaturen, gegebenenfalls unter Verwendung von Fremdvernetzern, gehärtet werden. Bei der Verwendung von Fremdvernetzern können übliche Vernetzungsmittel eingesetzt werden, wie beispielsweise Formaldehydkondensationsprodukte, z..B. Melaminharze und/oder blockierte Isocyanate. Spezielle Beispiele für die Formaldehydkondensationsprodukte sind die vorstehend für die Anreibeharze beschriebenen. Bei Verwendung eines derartigen Anreibeharzes kann dieses auch fremdvernetzend wirken. Die Härtung kann auch nach Beschichten mit einem üblichen Klarlack erfolgen, wobei vorgetrocknet oder bevorzugt naß in naß gearbeitet werden kann. Bei Verweundung von Zweikomponenten-Klarlacken (z.B. Acryl-Isocyanat und/oder Polyester-Isocyanat) werden bereits bei geringen Härtungstemperaturen besonders günstige Eigenschaften hinsichtlich Wasserfestigkeit, Steinschlagbeständigkeit Haftung und Witterungsstabilität erzielt. Derartige Härtungstemperaturen liegen z.B. bei 80 bis 130 °C. Mit einem Einkomponenten-Klarlack sind Temperaturen über 120 °C bevorzugt.

Die Schichtdicken liegen bevorzugt bei 10 bis 25 µm Trockenfilmdicke für die Überzüge aus den erfindungsgemäßen Überzugsmitteln und bei 30 bis 60 µm bei zusätzlicher Verwendung eines Klarlackes. Bevorzugt werden erfindungsgemäß "High-solids" als klare Decklacke verwendet. Die Beschichtung mit Klarlack ist nicht unbedingt erforderlich. Sie ist besonders günstig in der Kraftfahrzeugindustrie.

Durch Einsatz nicht vorvernetzter Bindemittel wird mit den erfindungsgemäßen Überzugsmitteln ein guter Verlauf erzielt, was zu glatten Oberflächen führt. Darüber hinaus wird die Bronzeausrichtung bei Metallic-Lacken verbessert. Die Wasserfestigkeit der erzielten Überzüge ist ausgezeichnet. Bei Verwendung auf dem Kraftfahrzeugesektor erzielt man eine ausgezeichnete Steinschlagbeständigkeit.

Beispiele:

Herstellungsbeispiel 1

Herstellung der Komponente A

In eine Lösung von 141 g eines Polyesters (OHZ = 88), hergestellt auf der Basis von Phthalsäureanhydrid, Isophthalsäure, Maleinsäureanhydrid, Propandiol und Glycerin, wie in der DE-OS 28 11 913 beschrieben, in 70 g Methylethylketon, wurden 100 g eines Anhydridgemischs ($SZ/H_2O$ = 486), hergestellt durch Umsetzung von Trimellitsäureanhydrid mit Propanidol-1,2, bestehend somit aus Trimellitsäureanhydrid und Anhydriden der nachstehenden Formeln I und II

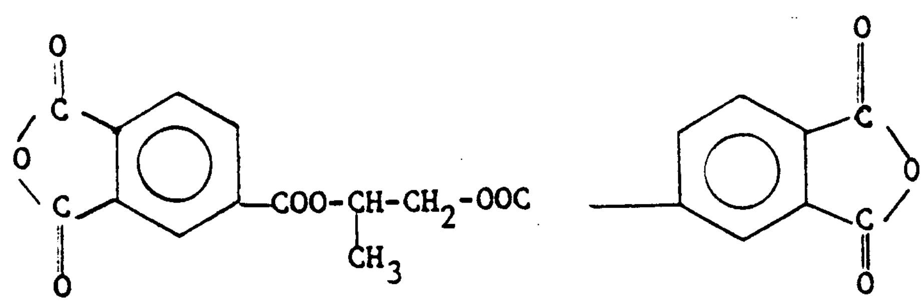

(II)

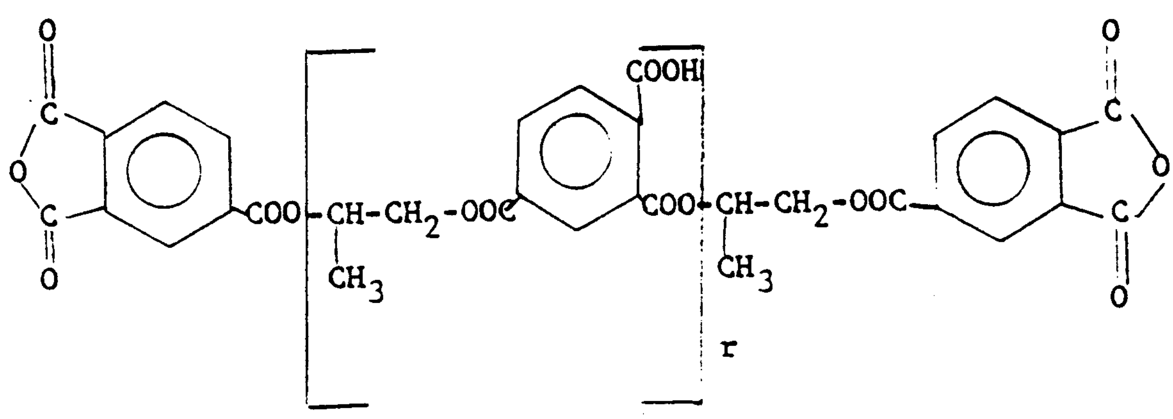

r = 1-8

die in 108 g Xylol bei 50 °C homogenisiert worden waren, innerhalb 1 Stunde zugetropft. Bei 90 °C wurde so lange gerührt, bis das Reaktionsgemisch eine Säurezahl in Wasser von 165 (100%iges Harz) erreicht hatte. Danach wurden 12 g Wasser zugemischt und nach 6stündigem Rühren bei 80 bis 90 °C eine Säurezahl in Butanol von 168 (100%iges Harz) erreicht. Die Gemischtemperatur wurde auf 60 °C gesenkt und nach Zugabe von 0,3 Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42g Dimethylamin (60%ig in Wasser) in 860 g Wasser eingerührt. Es wurde eine hellgelbe, opaleszierend Lösung erhalten, aus der bei 0,1 bar und 40 °C das organische Lösemittel abdestilliert wurde. Nach Filtration wurde eine gelbliche, praktisch klare wäßrige Harzlösung erhalten.

Festkörpergehalt : ca. 32% (1 Stunde bei 125 °C).

In einen Reaktor, ausgerüstet mit Rührer, Rückflußkühler, Innenthermometer und Dosiervorrichtung für die Monomeren, sowie den Initiator, wurden 705 g der vorstehenden wäßrigen (32%igen) Dispersion und 196g Wasser gefüllt. Diese Mischung wurde unter Rühren auf 80 °C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert.10 Minuten nach Beendigung der Zugabe wurden weitere 0,2 g Ammoniumperoxydisulfat,gelöst in 10g Wasser, innerhalb von 10 Minuten zugesetzt und der Ansatz noch 2 Stunden bei 80 °C gerührt,um vollständigen Umsatz zu erzielen. Es resultierte eine stabile wäßrige Dispersion mit ca. 40% Feststoffgehalt.

Herstellungsbeispiel 2

Wäßrige Polyurethan-Dispersion B

In einem Reaktiongefäß mit Rührer, Innenthermometer, Heizung und Rückflußkühler werden 250 g eines linearen Polyesters (aufgebaut aus Adipinsäure, Isophthalsäure, Hexandiol; OH-Zahl 77, Säurezahl 10) mit 80 g Methylethylketon und 53,3 g N-Methylpyrrolidon auf 70 °C erwärmt und bei dieser Temperatur 74 g hydriertes Bisphenol A sowie 28,3 g Dimethylolpropionsäure zugesetzt. Der Ansatz wird auf 120 °C erwärmt und eine halbe Stunde bei dieser Temperatur gerührt. Anschließend werden bei 70 °C 146,7 g Hexamethylendiisocyanat zugesetzt. Nach einer exothermen Phase (Temperatur <90 °C) wird der Ansatz so lange bei 75 °C gehalten, bis die Restisocyanatzahlwerte kleiner als 1,8 sind. Die warme Harzmischung wird in 891 g entionisiertes Wasser und 23,5 g Triethylamin unter starkem Rühren dispergiert. 5 min nach Ende der Harzzugabe werden 10,5 g Propylendiamin-1,3 in 75 g entionisiertes Wasser zugesetzt und der Ansatz noch 1 Stunde gerührt.

Es resultierte eine durchscheinende wäßrige Dispersion mit folgenden Kenndaten

| | |
|---|---|
| Feststoffgehalt : | 30 % |
| Viskosität (20 °C): | 109 mPa•s |
| pH-Wert : | 9,8 |
| Säurezahl : | 27 (mg KOH pro g Festharz) |

Herstellung der Komponente C1

912 g Butoxyethanol werden in einem Dreihalskolben unter Rückflußkühlung und Inertgas-Atmosphäre auf 130 °C erwärmt und dann mit Hilfe eines Tropftrichters innerhalb von 3 Stunden unter gutem Rühren ein Gemisch aus

| | |
|---|---|
| 60 g | Acrylsäure |
| 165 g | Hydroxyethylacrylat |
| 145 g | n-Butylacrylat |
| 60 g | Isobutylacrylat |
| 550 g | Methylmethacrylat |
| 20 g | Butandioldiacrylat |
| 6 g | tert.-Butyl-proxy-2-ethylhexanoat |

unter Halten der Reaktionstemperatur von 130 °C langsam zugegeben. Es wird zweimal mit tert.-Butylperoxy-2-ethylhexanoat im Abstand von 2 Stunden nachinitiert und dann das Harz auspolymerisiert.

Endwerte:

| | |
|---|---|
| Festkörper: | 50.4 Gew.-% (30 Minuten Erwärmen auf 180 °C) |
| Säurezahl : | 48 mg KOH pro g Festharz |
| Viskosität: | 21 Pa•s bei Festkörper |

Herstellung der Komponente C2

Herstellung wie C1, jedoch bei 120° C mit folgender Zusammensetzung

| | |
|---|---|
| 1927 g | Butoxyethanol |
| 92 g | Methacrylsäure |
| 331 g | Hydroxypropylacrylat |
| 462 g | Isobutylacrylat |
| 1134 g | Methylmethacrylat |
| 34 g | Hexandioldiacrylat |
| 14 g | tert.-Butyl-peroxy-2-ethoxyhexanoat. |

Endwerte:

| | |
|---|---|
| Festkörper : | 51.6 Gew.-% |
| Säurezahl : | 29 mg KOH pro g Festharz |
| Viskosität : | 29 Pa•s bei Festkörper (30 min 180° C) |

Herstellungsbeispiel 1

Herstellung einer Bindemittellösung:

| | |
|---|---|
| 50,00 Gew.-Teile | des vorstehend unter Herstellung der Komponente A beschriebenen wasserverdünnbaren Bindemittels werden mit |
| 43,94 Gew.-Teilen | vollentzalztem Wasser und |
| 6,00 Gew.-Teilen | Butoxyethanol vermischt und mit |
| 0,06 Gew.-Teilen | N-Dimethylaminoethanol auf einen pH-Wert von 6,2 - 6,4 eingestellt. |

Herstellungsbeispiel 2

Herstellung einer Aluminiumanteigung:

| | |
|---|---|
| 20,50 Gew.-Teile | einer handelsüblichen Aluminiumpaste mit einem Metallgehalt von 65% werden mit einer Mischung aus |
| 7,00 Gew.-Teilen | Butoxyethanol und |
| 14,00 Gew.-Teilen | vollentsalztem Wasser gut verrührt und anschließend mit einer Mischung aus |
| 10,00 Gew.-Teilen | des vorstehend unter Herstellung der Komponente A beschriebenen Bindemittels, |
| 10,00 Gew.-Teilen | Butoxyethanol, |
| 34,70 Gew.-Teilen | vollentsalztem Wasser und |
| 3,00 Gew.-Teilen | eines handelsüblichen sauren Acrylatverdickers versetzt. Mit einer Mischung aus |
| 0,08 Gew.-Teilen | N-Dimethylaminoethanol und |
| 0,72 Gew.-Teilen | vollentsalztem Wasser wird auf einen pH-Wert von 6,2 - 6,4 eingestellt. |

Herstellungsbeispiel 3

Herstellung einer blauen Pigmentanreibung:

Mithilfe eines Dissolvers werden

| | |
|---|---|
| 10,00 Gew.-Teile | Cu-Phthalocyaninpigment in |
| 17,00 Gew.-Teilen | eines handelsüblichen Hexamethoxymelaminharzes und |
| 10,00 Gew.-Teilen | Butoxyethanol vordispergiert und nach Zusatz von weiteren |
| 5,00 Gew.-Teilen | des Melaminharzes und |
| 10,00 Gew.-Teilen | Butoxyethanol mit einer Perlmühle ausdispergiert. Danach wird mit einer Mischung aus |
| 0,90 Gew.-Teilen | eines handelsüblichen sauren Acrylatverdickers und |
| 18,91 Gew.-Teilen | vollentsalztem Wasser versetzt und mit |
| 2,00 Gew.-Teilen | N-Dimethylaminoethanol und |

| | |
|---|---|
| 26,19 Gew.-Teilen | vollentsalztem Wasser auf pH 7,1 - 7,3 eingestellt. |

Herstellungsbeispiel 4

Herstellung einer grünen Pigmentanreibung:

| | |
|---|---|
| 10,00 Gew.-Teile | eines chlorierten Phthalocyaninpigmentes werden mit einem Dissolver in einer Mischung aus |
| 20,00 Gew.-Teilen | des vorstehend unter Herstellung der Komponente C beschriebenen Bindemittels |
| 35,00 Gew.-Teilen | Butoxyethanol und |
| 0,50 Gew.-Teilen | N-Dimethylaminoethanol vordispergiert und anschließend auf eine Perlmühle ausdispergiert. Danach wird die Mischung mit |
| 34,50 Gew.-Teilen | vollentsalztem Wasser verdünnt. |

BEISPIEL 1

1.1 Herstellung eines wasserverdünnbaren, blauen Metallicbasislackes:

| | |
|---|---|
| 60,00 Gew.-Teile | der in Herstellungsbeispiel 1 beschriebenen Bindemittellösung werden mit |
| 19,00 Gew.-Teilen | der in Herstellungsbeispiel 2 beschriebenen Aluminiumanteigung, |
| 1,90 Gew.-Teilen | saurem Acrylat-Verdicker (wie vorstehend verwendet), |
| 8,94 Gew.-Teilen | vollentsalztem Wasser und |
| 0,26 Gew.-Teilen | N-Dimethylaminoethanol für eine Dauer von 30 Minuten gerührt. |

In diese Mischung werden

| | |
|---|---|
| 4,00 Gew.-Teile | der unter Herstellung der Komponente B beschriebenen Polyurethandispersion eingerührt und die in Herstellungsbeispiel 3 beschriebene Pigmentanreibung wird in einer Menge von |
| 0,94 Gew.-Teilen | zugesetzt. Anschließend werden unter Rühren |
| 4,00 Gew.-Teile | n-Butanol zugegeben und mit |
| 0,96 Gew.-Teilen | Wasser auf eine Viskosität von 90 - 95 m Pa•s bei 100 $sec^{-1}$ eingestellt. |
| Festkörpergehalt: | 17,0 Gew.-% (120 Minuten in einem Umlufttrockenofen bei 120 °C). |

1.2 Aufbringen des Basislackes und eines Klarlackes:

Auf ein in üblicher Weise mit Zn-phosphatierung, Elektrotauchlack und Spritzgrund vorbehandeltes Blech wird der in 1.1 beschriebene Basislack mit einer Druckluft-zerstäubenden Spritzpitsole so aufgetragen, daß in zwei Auftragsschritten eine Gesamttrockenfilmstärke von 15 µm erreicht wird. Die Bedingungen bei der Applikation des Basislackes sind 23 °C Umgebungstemperatur und 60% relative Luftfeuchtigkeit. Nach der Applikation wird das beschichtete Blech in einem Umlufttrockenofen 5 Minuten bei 50 °C forciert getrocknet und nach dem Abkühlen auf 23 °C in üblicher Weise mit einem handelsüblichen Acryl-Melaminharz-Klarlack überschichtet und 30 Minuten bei 130 °C eingebrannt.

Man erhält so eine gleichmäßige wolkenfreie Beschichtung mit einem ausgezeichneten Metalliceffekt und sehr hohem Glanz.

BEISPIEL 2

2.1 Herstellung eines wasservedünnbaren silberfarbenen Metallicbasislackes:

Analog zu Beispiel 1.1 wird ein silberfarbener Basislack hergestellt aus

| | |
|---|---|
| 60,00 Gew.-Teilen | der in Herstellungsbeispiel 1 beschriebenen Bindemittellösung, |
| 19,00 Gew.-Teilen | der in Herstellungsbeispiel 2 beschriebenen Aluminiumanteigung, |
| 1,90 Gew.-Teilen | saurem Acrylatverdicker, |
| 0,26 Gew.-Teilen | N-Dimethylaminoethanol. |
| 5,00 Gew.-Teilen | Polyurethandispersion (gemäß Herstellung der Komponente B), |
| 4,00 Gew.-Teilen | n-Butanol und |
| 9,84 Gew.-Teilen | vollentsalztem Wasser. |

Der Festkörpergehalt beträgt 16,8 Gew.-% (120 Minuten im Umlufttrockenofen bei 120 °C). Die Viskosität liegt bei 90-95 mPa•s bei 100 $sec^{-1}$.

2.2 Aufbringen des Basislackes und eines Klarlackes:

Wie in Beispiel 1.2 beschrieben wird ein vorbehandeltes Blech mit Basislack beschichtet und 5 Minuten bei 50 °C forciert getrocknet. Nach dem Abkühlen wird mit einem handelsüblichen Zweikomponenten-Acryl-Isocyanat-Klarlack überschichtet und 30 Minuten bei 130 °C eingebrannt.

Die so erhaltene Beschichtung zeichnet sich durch eine hohe Brillanz, absolut gleichmäßige wolkenfreie Effektausbildung und ausgeprägten Metalliceffekt aus.

BEISPIEL 3

3.1 Herstellung eines wasserverdünnbaren grünen Metallicbasislackes:

Der Basislack wird analog Beispiel 1.1 hergestellt aus

| | |
|---|---|
| 59,00 Gew.-Teilen | Bindemittellösung nach Herstellungsbeispiel 1, |
| 18,50 Gew.-Teilen | Aluminiumanteigung nach Herstellungsbeispiel 2, |
| 1,90 Gew.-Teilen | saurem Acrylatverdicker, |
| 0,26 Gew.-Teilen | N-Dimethylaminoethanol, |
| 6,00 Gew.-Teilen | Polyurethandispersion nach Herstellung der Komponente B, |
| 1,20 Gew.-Teilen | der in Herstellungsbeispiel 4 beschriebenen grünen Pigmentanreibung, |
| 4,00 Gew.-Teilen | n-Butanol und |
| 9,14 Gew.-Teilen | vollentsalztem Wasser. |
| Festkörpergehalt: | 17,1 Gew.-% (120 Minuten im Umluftofen bei 120 °C) |
| Viskosität : | 90-95 mPa•s bei 100 $sec^{-1}$. |

3.2 Aufbringen des Basislackes und eines Klarlackes:

Wie in Beispiel 1.2 beschrieben wird der Basislack aus 3.1 auf einem vorbehandelten Blech appliziert und nach der forcierten Trocknung mit einem handelsüblichen Acryl-Melamin-Klarlack überschichtet und bei 130 °C 30 Minuten eingebrannt. Es resultiert eine grüne Metallicbeschichtung mit gleich gutem Eigenschaftsbild wie in den Beispiel 1.2 und 2.2.

**Patentansprüche**

**1.** Wäßriges Überzugsmittel, enthaltend ein filmbildendes Material auf der Basis einer wäßrigen Dispersion von wasserverdünnbaren Bindemitteln, die ein Gemisch aus
   A) 50 bis 95 Gew.-% eines Reaktionsproduktes aus
      a) 5 bis 95 Gew.-% eines carboxyfunktionellen Polykondensats, das zusätzlich Epoxygruppen enthält,
      b) 95 bis 5 Gew.-% mindestens eines copolymerisierbaren α,β-olefinisch ungesättigten Monomeren, und
      c) 0 bis 20 Gew.-% üblicher Hilfsstoffe für die Polymerherstellung, wobei sich die Mengenangaben der Bestandteile a) bis c) auf den Festkörperanteil der Komponente A beziehen und ihre Summe stets 100 Gew.-% beträgt,
   B) 50 bis 5 Gew.-% Polyurethandispersion, und
   C) 0 bis 20 Gew.-% Anreibeharz und/oder Anreibemittel

enthalten, wobei sich die Mengenanteil von A), B) und C) auf den Festkörperanteil beziehen und ihre Summe stets 100% beträgt,
sowie Pigmente und gegebenenfalls Lösemittel, Hilfs und Zusatzstoffe.

**2.** Wäßriges Überzugsmitttel nach Anspruch 1, dadurch gekennzeichnet, daß die Komponente B eine harnstoffgruppenhaltige Polyurethandispersion ist.

**3.** Wäßriges Überzugsmittel nach Anspruch 1 oder 2, dadurch gekennzeichnet, daß die Komponente A)c) aus anionischen und/oder nicht-ionischen Emulgatoren und/oder Schutzkolloiden besteht.

**4.** Wäßriges Überzugsmittel nach Anspruch 1,2 oder 3, dadurch gekennzeichnet, daß es als Anreibeharz Melaminharze, Polyesterharze und/oder Acrylatharze enthält

5. Verfahren zur Herstellung eines metallische und/oder nicht-metallische Effektpigmente enthaltenden Überzugsmittels nach einem der Ansprüche 1 bis 4, dadurch gekennzeichnet, daß man die Komponenten A) und B) mit den metallischen und/oder nicht-metallischen Effektpigmenten und gegebenenfalls der Komponente C) in mit einem farbgebenden Pigment angeriebener Form, in den in Anspruch 1 angegebenen Menganteilen, vermischt.

6. Verfahren zur Herstellung eines farbpigmenthaltigen Überzugsmittels nach einem der Ansprüche 1 bis 4, dadurch gekennzeichnet, daß man die Komponente C) mit einem farbgebenden Pigment abreibt und in den in Anspruch 1 angegebenen Mengenanteilen in beliebiger Reihenfolge mit den Komponenten A) und B) oder einem Gemisch aus A) und B), sowie gegebenenfalls einem metallischen oder nicht-metallischen Effektpigment vermischt.

7. Verwendung der wäßrigen Überzugsmittel gemäß Anspruch 1 bis 4 zur Herstellung eines Überzugs auf einem Substrat durch Auftrag auf die Oberfläche des Substrats, Vernetzung und gegebenenfalls Überschichten mit einem Klarlack.

**Claims**

1. An aqueous coating agent containing a film-forming material based on an aqueous dispersion of water-dilutable binders that contain a mixture of
   A) 50 to 95 wt.% of a reaction product from
      a) 5 to 95 wt% of a carboxy-functional polycondensate that additionally contains epoxy groups,
      b) 95 to 5 wt% of at least one compolymerizable $\alpha$, $\beta$-olefinically unsaturated monomer and
      c) 0 to 20 wt% of conventional auxiliary agents for polymer production, where the quantities of ingredients a) to c) relate to the solids content of Component A and their sum is always 100 wt%,
   B) 50 to 5 wt% of a polyurethane dispersion and
   C) 0 to 20 wt% of a grinding resin and/or grinding agent,

   where the proportions of A), B) and C) relate to the solids content and their sum is always 100%, together with pigments and optionally solvents, auxiliary agents and additives.

2. An aqueous coating agent according to Claim 1, characterized in that Component B is a urea-group-containing polyurethane dispersion.

3. An aqueous coating agent according to Claim 1 or 2, characterized in that Component A)c) consists of anionic and /or non-ionic emulsifiers and/or protective colloids.

4. An aqueous coating agent according to Claim 1, 2 or 3, characterized in that it contains as a grinding resin melamine resins, polyester resins and/or acrylate resins.

5. A process for production of a coating agent according to one of Claims 1 to 4 containing metallic and/or non-metallic effect pigments, characterized in that Components A) and B) are mixed with the metallic and/or non-metallic effect pigments and optionally Component C) in a form ground with a colouring pigment in the proportions indicated in Claim 1.

6. A process for production of a coating agent according to one of Claims 1 to 4, characterized in that Component C) is ground with a colouring pigment amd mixed with Components A) or B) or with a mixture of A) and B) in the proportions given in Claim 1 in any order, as well as optionally with a metallic or non-metallic effect pigment.

7. The use of the aqueous coating agents according to Claims 1 to 4 for production of a coating on a substrate by application to the surface of the substrate, crosslinking and optionally adding a coat of a clear lacquer.

**Revendications**

1. Composition aqueuse de revêtement contenant un matériau filmogène à base d'une dispersion aqueuse de liants diluables dans l'eau, contenant un mélange de :
   (A) 50 à 95 % en poids de réaction de :

(a) 5 à 95 % en poids d'un polycondensat présentant des fonctions carboxy, contenant en plus des groupes époxy,
(b) 95 à 5 % en poids d'au moins un monomère $\alpha,\beta$ oléfiniquement insaturé copolymérisable, et
(c) 0 à 20 % en poids d'adjuvants usuels pour la préparation des polymères, les proportions des constituants (a) à (c) se rapportant à la proportion en produit solide du composant (A) et leur somme étant toujours égale à 100 % en poids,

(B) 50 à 5 % en poids d'une dispersion de polyuréthane, et
(C) 0 à 20 % en poids d'une résine broyée et/ou d'un agent de broyage,

les proportions de (A), (B) et (C) se rapportant à la proportion en produit solide et leur somme étant toujours égale à 100, ainsi que des pigments et éventuellement des solvants, des adjuvants et des additifs.

**2.** Composition aqueuse de revêtement selon la revendication 1, caractérisée en ce que le composant (B) est une dispersion de polyuréthane contenant des groupes urées.

**3.** Composition aqueuse de revêtement selon la revendication 1 ou 2, caractérisée en ce que le composant (A)(c) est constitué d'émulsifiants anioniques et/ou non-ioniques et/ou de colloïdes protecteurs.

**4.** Composition aqueuse de revêtement selon les revendications 1, 2 ou 3, caractérisée en ce qu'elle contient, comme résine broyée, des résines de mélamine, des résines de polyester et/ou des résines d'acrylates.

**5.** Procédé pour la préparation d'une composition de revêtement contenant des pigments d'effets métalliques et/ou non-métalliques selon l'une des revendications 1 à 4, caractérisé en ce que l'on mélange les composants (A) et (B) avec les pigments d'effets métalliques et/ou non-métalliques et éventuellement avec le composant (C) avec un pigment colorant sous forme broyée, dans les proportions indiquées dans la revendication 1.

**6.** Procédé pour la préparation d'une composition de revêtement contenant des pigments colorés selon l'une des revendications 1 à 4, caractérisé en ce que l'on broye le composant (C) avec un pigment colorant et en ce qu'on le mélange, dans les proportions indiquées dans la revendication 1 et dans un ordre quelconque, avec les composants (A) et (B) ou avec un mélange de (A) et de (B) ainsi qu'éventuellement avec un pigment d'effet métallique ou non-métallique.

**7.** Utilisation d'une composition aqueuse de revêtement selon les revendications 1 à 4 pour la préparation d'un revêtement sur un substrat par application sur la surface du substrat, réticulation et éventuellement recouvrement avec une laque claire.